# EUROPÄISCHE PATENTANMELDUNG

(11) **EP 2 860 862 A2**
(43) Veröffentlichungstag der Anmeldung: **15.04.2015**
(21) Anmeldenummer: 14188700.0
(22) Anmeldetag: 13.10.2014
(51) Int. Cl.: H02M 1/00

(54) **Spannungswandleranordnung**

(30) Priorität: 11.10.2013 DE 102013017356
(71) Anmelder: Micropatent B.V., 7609 PK Almelo (NL)
(72) Erfinder: Schmidt, Martin, 79312 Emmendingen (DE); Gavrikov, Alexander, 79100 Freiburg (DE); Nurnus, Joachim, 79395 Neuenburg (DE)
(74) Vertreter: Staroske, Sandro

(57) **Zusammenfassung**

Die Erfindung betrifft eine Spannungswandleranordnung, mit mindestens einem Gleichspannungswandler (2), der durch Anlegen einer eine festgelegte Mindesteingangsspannung übersteigenden Eingangsspannung aktivierbar ist. Erfindungsgemäß ist ein Hilfsspannungswandler (3) vorgesehen, der eine andere Topologie als der Gleichspannungswandler (2) aufweist und der so mit dem Gleichspannungswandler (2) zusammenwirkt, dass der Gleichspannungswandler (2) durch Anlegen einer Spannung an den Hilfsspannungswandler (3) aktivierbar ist, die kleiner als die Mindesteingangsspannung des Gleichspannungswandlers (2) ist.

## Beschreibung

Die Beschreibung betrifft eine Spannungswandleranordnung gemäß dem Oberbegriff des Anspruchs 1.

Spannungswandleranordnungen mit Gleichspannungswandlern sind aus dem Stand der Technik bekannt, wobei die Gleichspannungswandler dazu dienen, eine Eingangsgleichspannung in eine modifizierte Ausgangsgleichspannung umzusetzen. Beispielsweise wird mit einem Gleichspannungswandler in Form eines Aufwärtswandlers ("Boost Converter") eine Eingangsgleichspannung in eine höhere Ausgangsgleichspannung transformiert. Eine Schwierigkeit bei der Verwendung eines Gleichspannungswandlers ist, dass diese eine Mindesteingangsspannung benötigen. Wird dem Gleichspannungswandler eine Spannung zugeführt, die kleiner als die Mindesteingangsspannung ist, erfolgt keine oder allenfalls eine ineffiziente Spannungsumsetzung.

Das der Erfindung zugrunde liegende Problem besteht darin, eine möglichst effiziente Spannungsumsetzung auch für kleine Eingangsspannungen zu ermöglichen.

Dieses Problem wird durch die Bereitstellung einer Spannungswandleranordnung mit den Merkmalen des Anspruchs 1 gelöst. Weiterbildungen der Erfindung sind in den abhängigen Ansprüchen angegeben.

Danach wird eine Spannungswandleranordnung zur Verfügung gestellt, mit
- mindestens einem Gleichspannungswandler, der durch Anlegen einer eine festgelegte Mindesteingangsspannung übersteigenden Eingangsspannung aktivierbar ist, sowie
- einem Hilfsspannungswandler, der eine andere Topologie als der Gleichspannungswandler aufweist (d.h. von einem anderen Wandlertyp ist) und der so mit dem Gleichspannungswandler zusammenwirkt, dass durch Anlegen einer Spannung an den Hilfsspannungswandler, die kleiner als die Mindesteingangsspannung des Gleichspannungswandlers ist, der Gleichspannungswandler aktiviert wird.

Der Hilfsspannungswandler ermöglicht insbesondere eine effiziente (energieeffiziente) Spannungswandlung auch für kleinere Eingangsspannungen, die unterhalb der Mindesteingangsspannung des Gleichspannungswandlers liegen. Beispielsweise wird die zu wandelnde Spannung einem Eingang des Hilfsspannungswandlers zugeführt, wobei der Hilfsspannungswandler die zugeführte Spannung in eine Ausgangsspannung umsetzt, die über einen Ausgang des Hilfsspannungswandlers dem Gleichspannungswandler zugeführt wird. Insbesondere ermöglicht die Verwendung des Hilfsspannungswandlers einen schnelleren Kaltstart des Gleichspannungswandlers.

Dass der Gleichspannungswandler durch Anlegen einer Spannung, die größer ist als eine Mindesteingangsspannung, "aktivierbar" ist, bedeutet z.B., dass der Gleichspannungswandler bei Vorliegen einer derartigen Eingangsspannung in einen Kaltstartmodus oder in einen effizienten Spannungswandelmodus gebracht wird. Dass der Gleichspannungswandler und der Hilfsspannungswandler unterschiedliche Topologien aufweisen, bedeutet, dass es sich um unterschiedliche Wandlertypen handelt, die insbesondere unterschiedliche Hauptkomponenten zur Spannungswandlung aufweisen.

Es wird darauf hingewiesen, dass zur Aktivierung des Gleichspannungswandlers insbesondere eine Mindestenergie erforderlich ist. Dabei kann der Gleichspannungswandler so ausgelegt sein, dass er durch Anlegen einer möglichst kleinen Mindesteingangsspannung oder einer möglichst kleinen Mindesteingangsstromstärke (mit der natürlich ebenfalls eine erforderliche Mindesteingangsspannung verbunden ist) aktivierbar ist.

Beispielsweise ist der Gleichspannungswandler in Form eines Aufwärtswandlers ausgebildet, der insbesondere einen integrierten Schaltkreis umfasst (z.B. den BQ25504 von Texas Instruments, den LTC3108 von LinearTechnology oder das Modul EH4295 von Advanced Linear Devices). Der Gleichspannungswandler kann einen Startkonverter und einen Hauptkonverter aufweisen, wobei der Start- und der Hauptkonverter z.B. zwar vom gleichen Wandlertyp sind (z.B. jeweils als Aufwärtswandler ausgebildet sind), der Hauptkonverter jedoch eine effizientere Spannungswandlung ermöglicht als der Startkonverter.

Der Startkonverter wird insbesondere aktiviert, wenn an einem Eingang des Gleichspannungswandlers die Mindesteingangsspannung anliegt, während der Hauptkonverter z.B. dann aktiviert wird, wenn eine Ausgangsspannung des Gleichspannungswandlers eine vorgebbare Mindestausgangsspannung erreicht.

Bei dem Startkonverter handelt es sich z.B. um einen ungeregelten Aufwärtswandler, während der Hauptkonverter durch einen geregelten (und damit effizienzoptimierten) Aufwärtswandler ausgebildet ist. Der Startkonverter und der Hauptkonverter besitzen insbesondere gemeinsame elektronische Bauelemente, d.h. es handelt sich nicht um vollständig zueinander separate Schaltkreise wie dies bei den Schaltkreisen des Hilfsspannungswandlers und des Gleichspannungswandlers der Fall sein kann. Beispielsweise verwenden Startkonverter und der Hauptkonverter dieselben induktiven Elemente und/oder denselben Transformator.

Insbesondere wirkt der Hilfsspannungswandler so mit dem Gleichspannungswandler zusammen, dass der Startkonverter aktiviert wird, wenn dem Hilfsspannungswandler eine Spannung zugeführt wird, die kleiner als die Mindesteingangsspannung ist. Beispielsweise muss dem Startkonverter des Gleichspannungswandlers eine Mindesteingangsspannung von 300 - 400 mV (z.B. 330 mV - 360 mV) zugeführt werden, damit dieser aktiviert wird (d.h. der Kaltstartmodus anspringt). Diese zur Aktivierung des Startkonverters erforderliche Mindestspannung wird durch den Hilfsspannungswandler z.B. auf etwa 200 mV gesenkt. Des Weiteren kann die durch Verwendung des Hilfsspannungswandlers die Zeitspanne bis zum Aktivieren des Hauptkonverters verkürzt werden.

Der Hilfsspannungswandler ist z.B. ebenfalls als Gleichspannungswandler ausgebildet, z.B. in Form eines Sperrwandlers (etwa eines Sperrschwingers mit einem diskreten Oszillator).

Gemäß einer anderen Ausgestaltung der Erfindung weist die Spannungswandleranordnung eine mit dem Gleichspannungswandler und dem Hilfsspannungswandler zusammenwirkende Steuerung auf, wobei die Steuerung den Hilfsspannungswandler abschaltet, sobald eine Ausgangsspannung des Gleichspannungswandlers eine vorgebbare Mindestausgangsspannung übersteigt. Insbesondere schaltet die Steuerung den Hilfsspannungswandler ab, wenn der Hauptkonverter des Gleichspannungswandlers aktiv ist.

Beispielsweise handelt es sich bei der Steuerung um einen Schalter; z.B. um einen analogen Schalter, der in Form eines Halbleiterbauelementes realisiert ist. Denkbar ist, dass die Steuerung auf ein Signal (etwa ein Deaktivierungssignal - "Disable signal") des Gleichspannungswandlers den Hilfsspannungswandler abschaltet.

In einer Variante der Erfindung ist der Gleichspannungswandler in Form eines ersten elektronischen Bausteins und der Hilfsspannungswandler in Form eines zweiten elektronischen Bausteins ausgebildet ist, wobei der erste elektronische Baustein verschieden von dem zweiten elektronischen Baustein ist. Denkbar ist, dass die Bausteine auf einer gemeinsamen Leiterplatte angeordnet und über Leitungen der Leiterplatte miteinander verbunden sind. Es ist allerdings auch möglich, dass der Gleichspannungswandler und der Hilfsspannungswandler kombiniert sind und z.B. in einem gemeinsamen elektronischen Baustein realisiert sind. Der Hilfsspannungswandler ist jedoch auch in dieser Ausführungsform separat zu dem Gleichspannungswandler ausgebildet, d.h. der Hilfsspannungswandler ist durch einen elektrischen Schaltkreis gebildet, der zusätzlich zu einem elektrischen Schaltkreis, der den Gleichspannungswandler bildet, vorhanden ist. Die Schaltkreise sind zwar miteinander verbunden, werden jedoch durch separate Komponenten gebildet.

Die Erfindung betrifft auch eine Energiewandleranordnung mit einer wie oben beschriebenen Spannungswandleranordnung und einem Energiewandler zum Wandeln einer Energieform in elektrische Energie, wobei ein Ausgang des Energiewandlers mit einem Eingang des Gleichspannungswandlers und einem Eingang des Hilfsspannungswandlers verbunden ist.

Bei dem Energiewandler handelt es sich z.B. um einen Thermogenerator oder eine Photovoltaikvorrichtung.

Die Erfindung wird im Folgenden anhand eines Ausführungsbeispiels unter Bezugnahme auf die Figuren näher erläutert. Es zeigen:
- Fig. 1: ein Blockschaltbild einer erfindungsgemäßen Spannungswandleranordnung; und
- Fig. 2: einen teilweise schematischen Schaltplan einer Spannungswandleranordnung gemäß einem Ausführungsbeispiel der Erfindung.

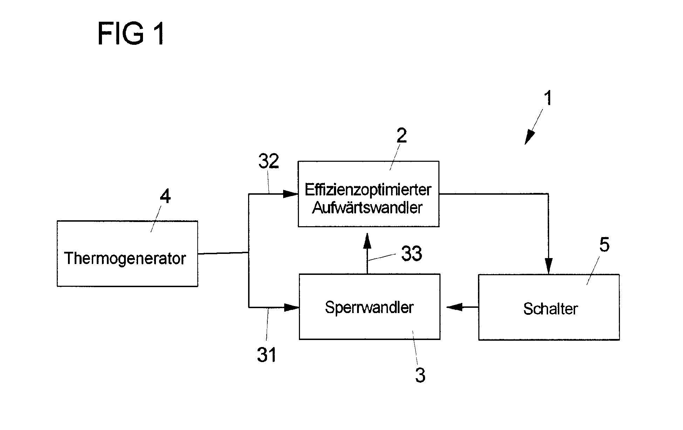

Gemäß Figur 1 weist die erfindungsgemäße Spannungswandleranordnung 1 einen Gleichspannungswandler in Form eines effizienzoptimierten Aufwärtswandlers ("DC-DC-Boosters") 2 sowie einen von dem Aufwärtswandler 2 verschiedenen Hilfsspannungswandler in Form eines Sperrwandlers 3 auf. Bei dem Aufwärtswandler 2 und dem Sperrwandler 3 handelt es sich also um Spannungswandler unterschiedlicher Wandlertopologie.

Der Aufwärtswandler 2 und der Sperrwandler 3 sind parallel über Leitungen 31, 32 mit einem Energiewandler in Form eines Thermogenerators 4 verbunden. Anstelle oder zusätzlich zu dem Thermogenerator 4 kann auch ein anderer Energiewandlertyp verwendet werden, z.B. eine Photovoltaikvorrichtung. Über einen Ausgang des Aufwärtswandlers 2 kann ein Verbraucher (nicht dargestellt) mit der vom Aufwärtswandler 2 bereitgestellten Spannung versorgt werden.

Der Aufwärtswandler 2 benötigt eine Mindesteingangsspannung, um in einen aktiven Modus zu gelangen, wobei der Fall eintreten kann, dass die vom Thermogenerator 4 direkt über die Leitung 32 einem Eingang des Aufwärtswandlers 2 zugeführte Spannung kleiner ist als dessen Mindesteingangsspannung und somit den Aufwärtswandler nicht in den aktiven Modus versetzen kann.

Die vom Thermogenerator 4 erzeugte Spannung wird jedoch gleichzeitig über die Leitung 31 auch dem Sperrwandler 3 zugeleitet, der eine geringere Mindesteingangsspannung (Leerlaufspannung) besitzt als der Aufwärtswandler 2. Der Sperrwandler 3 ist mit dem Aufwärtswandler 2 über eine Leitung 33 verbunden und wirkt so mit dem Aufwärtswandler 2 zusammen, dass der Aufwärtswandler 2 durch eine über die Leitung 31 an dem Sperrwandler 3 anliegenden Thermogeneratorspannung aktivierbar ist, die kleiner als die Mindesteingangsspannung des Aufwärtswandlers 2 ist.

Beispielsweise weist der Sperrwandler 3 eine Startspannung von etwa 200 mV auf, so dass die effektiv zum Starten eines mittels des Aufwärtswandlers 2 betriebenen Verbrauchers erforderliche Mindesteingangsspannung auf diesen Wert gesenkt werden kann. In Abhängigkeit von der Ausführung des Thermogenerators ist eine derartige Spannung bereits bei Temperaturdifferenzen am Thermogenerator von z.B. etwa 1,4 K oder etwa 3 K erzeugbar.

Die Spannungswandleranordnung 1 weist darüber hinaus eine Steuerung in Form eines mit dem Aufwärtswandler 2 und dem Sperrwandler 3 zusammenwirkenden Schalters 5 auf. Der Schalter 5 deaktiviert den Sperrwandler 3, wenn die von dem Aufwärtswandler 2 erzeugte Ausgangsspannung eine Mindestausgangsspannung übersteigt. Die Deaktivierung des Sperrwandlers 3 soll insbesondere eine effizienzherabsetzende Interaktion des Sperrwandlers 3 mit dem Aufwärtswandler 2 verhindern, sobald sich dieser in seinem aktiven, effizienzoptimierten Modus befindet.

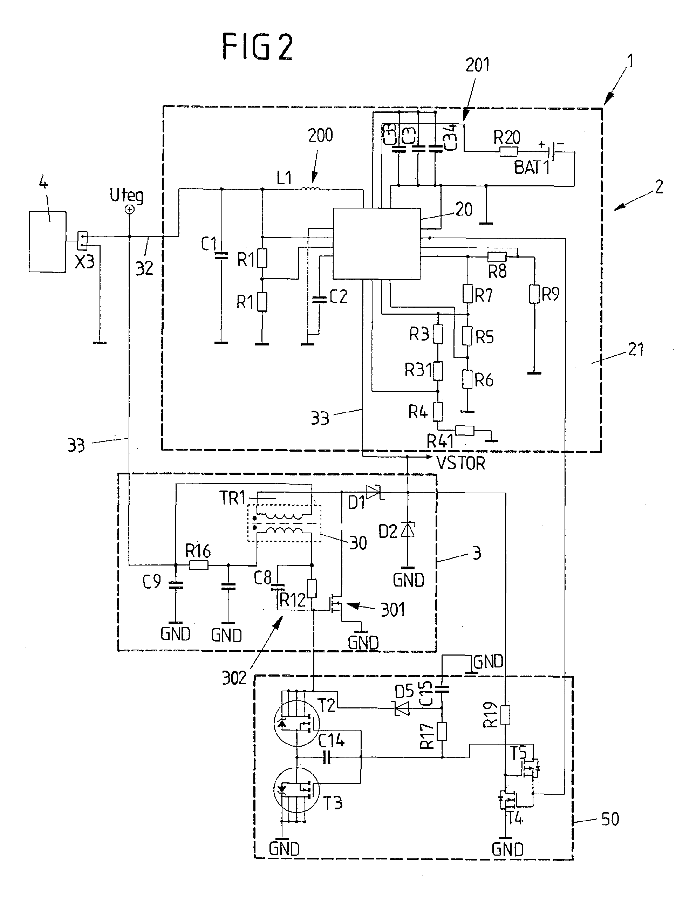

Figur 2 betrifft eine konkretere Ausgestaltung der Spannungswandleranordnung aus Fig. 1. Analog weist die Spannungswandleranordnung 1 einen Aufwärtswandler 2 und einen mit ihm zusammenwirkenden Sperrwandler 3 auf, die parallel zu einem Thermogenerator 4 geschaltet sind. Der Aufwärtswandler 2 umfasst einen elektronischen Baustein in Form eines ICs 20 (den BQ25504 von Texas Instruments), der mit einer elektronischen Schaltung 21 verbunden ist.

Der Sperrwandler 3 wirkt über eine Leitung 33 mit dem Aufwärtswandler 2 zusammen, wobei die Leitung 33 einen Ausgang des Sperrwandlers 3 mit einer Speichersektion 201 der Schaltung 21 und darüber mit einer Schnittstelle des ICs 20 verbindet.

Die Topologie des Aufwärtswandlers 2 beinhaltet eine Spule 200 zur vorübergehenden Speicherung von elektrischer Energie, während der Sperrwandler 3 als Hauptkomponente einen Transformator 30 aufweist.

Insbesondere weist der Aufwärtswandler 2 wie oben bereits erläutert einen Start- und einen Hauptkonverter auf, wobei der Hauptkonverter eine effizientere Spannungswandlung ermöglicht als der Startkonverter. Der Startkonverter wird aktiviert, wenn die Eingangsspannung am Aufwärtswandler 2 die Mindesteingangsspannung übersteigt. Der Hauptkonverter hingegen übernimmt die Spannungswandlung erst, wenn der Aufwärtswandler 2 eine Mindestausgangspannung (z.B. mindestens 1,8 V) erzeugt.

Der Haupt- und der Startkonverter besitzen jedoch dieselbe Wandlertopologie (die eines Aufwärtswandlers) und verwenden zumindest teilweise dieselben Komponenten des ICs 20 und/oder der Schaltung 21; z.B. verwenden sowohl der Startkonverter als auch der Hauptkonverter die Spule 200. Der Sperrwandler 3 ist also insbesondere auch verschieden von dem Startkonverter des Aufwärtswandlers 2.

Darüber hinaus umfasst die Spannungswandleranordnung 1 einen Schalter in Form eines Halbleiterschalters 50, der den Sperrwandler 3 deaktiviert, sobald der Aufwärtswandler 2 in seinem effizienzoptimierten Modus arbeitet, wie oben bereits erläutert. Insbesondere wird auf ein entsprechendes Signal des IC 20 hin das Potential des Gates eines Transistors 301 des Sperrwandlers 3 auf Masse gebracht, wodurch eine Oszillation eines Schwingkreises 302 des Sperrwandlers 3 beendet und somit der Sperrwandler 3 deaktiviert wird. Der Sperrwandler 3 wird insbesondere dann reaktiviert, wenn die Ausgangsspannung des Aufwärtswandlers 2 unter eine Mindestausgangsspannung fällt.

### Bezugszeichenliste

- 1: Spannungswandleranordnung
- 2: Aufwärtswandler
- 3: Sperrwandler
- 4: Thermogenerator
- 5: Schalter
- 20: IC
- 21: Schaltung
- 30: Transformator
- 31, 32, 33: Leitung
- 50: Halbleiterschalter
- 200: Spule
- 201: Speichersektion

## Patentansprüche

1. Spannungswandleranordnung, mit mindestens einem Gleichspannungswandler (2), der durch Anlegen einer eine festgelegte Mindesteingangsspannung übersteigenden Eingangsspannung aktivierbar ist,
**gekennzeichnet durch**
einen Hilfsspannungswandler (3), der eine andere Topologie als der Gleichspannungswandler (2) aufweist und der so mit dem Gleichspannungswandler (2) zusammenwirkt, dass der Gleichspannungswandler (2) **durch** Anlegen einer Spannung an den Hilfsspannungswandler (3) aktivierbar ist, die kleiner als die Mindesteingangsspannung des Gleichspannungswandlers (2) ist.

2. Spannungswandleranordnung nach Anspruch 1, **dadurch gekennzeichnet, dass** der Gleichspannungswandler (2) in Form eines Aufwärtswandlers ausgebildet ist.

3. Spannungswandleranordnung nach Anspruch 1 oder 2, **dadurch gekennzeichnet, dass** der Gleichspannungswandler (2) einen Startkonverter und einen Hauptkonverter aufweist.

4. Spannungswandleranordnung nach Anspruch 3, **dadurch gekennzeichnet, dass** der Startkonverter und der Hauptkonverter gemeinsame elektronische Bauelemente (200) verwenden.

5. Spannungswandleranordnung nach Anspruch 3 oder 4, **dadurch gekennzeichnet, dass** der Hauptkonverter eine effizientere Spannungswandlung ermöglicht als der Startkonverter.

6. Spannungswandleranordnung nach einem der Ansprüche 3 bis 5, **dadurch gekennzeichnet, dass** der Startkonverter aktiviert wird, wenn an einem Eingang des Gleichspannungswandlers (2) mindestens die Mindesteingangsspannung anliegt.

7. Spannungswandleranordnung nach einem der Ansprüche 3 bis 6, **dadurch gekennzeichnet, dass** der Hauptkonverter aktiviert wird, wenn an einem Ausgang des Gleichspannungswandlers (2) eine vorgebbare Mindestausgangsspannung anliegt.

8. Spannungswandleranordnung nach einem der vorhergehenden Ansprüche, **dadurch gekennzeichnet, dass** der Hilfsspannungswandler (3) ebenfalls ein Gleichspannungswandler ist.

9. Spannungswandleranordnung nach Anspruch 8, **dadurch gekennzeichnet, dass** der Hilfsspannungswandler (3) in Form eines Sperrwandlers ausgebildet ist.

10. Spannungswandleranordnung nach einem der vorhergehenden Ansprüche, **gekennzeichnet durch** eine mit dem Gleichspannungswandler (2) und dem Hilfsspannungswandler (3) zusammenwirkenden Steuerung (5, 50), die den Hilfsspannungswandler (3) abschaltet, sobald eine Ausgangsspannung des Gleichspannungswandlers (2) eine vorgebbare Mindestausgangsspannung übersteigt.

11. Spannungswandleranordnung nach Anspruch 10, **dadurch gekennzeichnet, dass** es sich bei der Steuerung (5, 50) um einen Schalter, insbesondere um einen analogen Schalter, handelt.

12. Spannungswandleranordnung nach einem der vorhergehenden Ansprüche, **dadurch gekennzeichnet, dass** der Gleichspannungswandler (2) einen zu dem Hilfsspannungswandler (3) separaten elektronischen Baustein (20) aufweist.

13. Energiewandleranordnung mit einer Spannungswandleranordnung (1) nach einem der vorhergehenden Ansprüche und einem Energiewandler (4) zum Wandeln einer Energieform in elektrische Energie, wobei ein Ausgang des Energiewandlers (4) mit einem Eingang des Gleichspannungswandlers (2) und einem Eingang des Hilfsspannungswandlers (3) verbunden ist.

14. Energiewandleranordnung nach Anspruch 13, **dadurch gekennzeichnet, dass** es sich bei dem Energiewandler (4) um einen Thermogenerator oder eine Photovoltaikvorrichtung handelt.
